(19) Europäisches Patentamt / European Patent Office / Office européen des brevets

(11) **EP 3 450 739 B1**

(12) **FASCICULE DE BREVET EUROPEEN**

(45) Date de publication et mention
de la délivrance du brevet:
**02.10.2019 Bulletin 2019/40**

(51) Int Cl.:
***F02M 35/14*** *(2006.01)*

(21) Numéro de dépôt: **18189985.7**

(22) Date de dépôt: **21.08.2018**

(54) **ENSEMBLE DE FILTRATION**

FILTERANORDNUNG

FILTERING ASSEMBLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.09.2017 FR 1758195**

(43) Date de publication de la demande:
**06.03.2019 Bulletin 2019/10**

(73) Titulaire: **NOVARES France
92140 Clamart (FR)**

(72) Inventeur: **KELLE, Nicolas
62100 Calais (FR)**

(74) Mandataire: **Delorme, Nicolas et al
Cabinet Germain & Maureau
12, rue de la République
42000 Saint Etienne (FR)**

(56) Documents cités:
**CN-A- 101 782 033          CN-U- 202 100 355
DE-A1-102012 000 806     GB-A- 607 889
GB-A- 1 003 056**

**Description**

La présente invention concerne un ensemble de filtration d'un flux d'air pour un véhicule automobile.

Les moteurs à combustion interne fonctionnent sur le principe de la combustion d'air et de carburant. Dans le cas des véhicules automobiles, l'air utilisé provient d'une ligne d'admission d'air qui permet de capter de l'air à l'extérieur du véhicule et de le filtrer avant qu'il ne soit injecté dans le moteur.

D'une manière générale, pour filtrer l'air injecté dans le moteur, les véhicules automobiles comprennent un ensemble de filtration d'air qui comprend une boite à filtre dans laquelle débouche une entrée d'air, un élément filtrant et un couvercle de boite à filtre. En fonctionnement, le flux d'air pénètre dans la boîte à filtre, traverse l'élément filtrant et sort de la boite à filtre par une sortie d'air, pour être admis dans une chambre de combustion du moteur. De tels ensembles de filtration ont notamment été décrits dans les demandes de brevet DE 10 2012 000806, CN 202 100 355U et GB 1003 056, cette dernière demande décrivant un ensemble de filtration comprenant une boite à filtre dans laquelle débouche une entrée d'air, un couvercle de boite à filtre entre lesquels est interposé un élément filtrant, l'ensemble de filtration comprenant un élément de répartition du flux d'air circulant dans la boite à filtre, l'élément comprenant une enveloppe présentant une géométrie adaptée pour former un flux d'air cyclonique, et des moyens d'atténuation acoustique comprenant au moins une chambre délimitant un volume de résonance à l'intérieur de l'élément.

Dans les dispositifs connus, le flux d'air traverse régulièrement une même région de l'élément filtrant ce qui entraine un encrassement localisé de l'élément filtrant et nuit à la qualité de la filtration. En d'autres termes, le flux d'air est focalisé sur une portion de l'élément filtrant et non pas sur la totalité de sa surface filtrante.

Pour pallier ce problème, il existe des dispositifs tendant à homogénéiser la répartition du flux d'air sur la surface filtrante de l'élément filtrant. Cependant, ces dispositifs créent des pertes de charges sur la ligne d'admission d'air, ce qui est préjudiciable aux bonnes performances - notamment de consommation - du moteur.

Par ailleurs, la circulation du flux d'air - généralement comprimé par le compresseur d'un turbocompresseur - dans la ligne d'admission d'air génère des émissions acoustiques rayonnées au travers des conduits. Ces émissions acoustiques nuisent au confort d'utilisation du véhicule.

Dans ce contexte technique, la présente invention a pour objectif de fournir un ensemble de filtration d'un flux d'air qui permette de répartir le flux d'air sur la surface de filtration de l'élément filtrant, sans provoquer de pertes de charges et tout en réduisant la propagation d'émissions acoustiques sur la ligne d'admission d'air.

Selon une définition générale, l'invention concerne un ensemble de filtration d'un flux d'air pour un véhicule automobile selon la revendication 1.

D'une manière particulièrement avantageuse, l'enveloppe extérieure permet de créer un flux d'air tourbillonnant, en minimisant les pertes de charges. Le flux tourbillonnant ainsi généré se répartit de façon sensiblement homogène sur une surface filtrante de l'élément filtrant.

De plus, la chambre délimitant un volume de résonance est utilisée comme un artifice acoustique de type résonateur d'Helmholtz. En effet, lorsqu'il est stimulé par des ondes sonores, le volume d'air compris dans le volume de résonance agit sensiblement comme une petite masse, qui serait suspendue à un ressort constitué par le volume d'air plus important contenu dans l'ensemble de filtration. On obtient ainsi une atténuation des bruits dans une bande spectrale située au voisinage de la fréquence caractéristique de ce système « masse-ressort » et permet donc de réduire la propagation d'émissions acoustiques sur la ligne d'admission d'air.

Ainsi, l'invention propose un ensemble de filtration d'un flux d'air qui permet de répartir le flux d'air sur la surface de filtration de l'élément filtrant, sans provoquer de pertes de charges et tout en réduisant la propagation d'émissions acoustiques sur la ligne d'admission d'air.

Selon une disposition particulière, l'élément peut comprendre plusieurs chambres de dimensions différentes, chaque chambre délimitant un volume de résonance de dimension différente.

L'élément peut comprendre une pluralité de parois intérieures délimitant la, ou chaque, chambre.

L'ensemble de filtration peut comprendre au moins un conduit d'air débouchant à l'intérieur de l'élément, dans ladite au moins une chambre.

Ledit au moins un conduit d'air peut être un conduit d'alimentation en air dérivé de l'entrée d'air.

Selon une disposition particulière, l'enveloppe extérieure peut présenter au moins une nervure permettant d'orienter le flux d'air.

Selon une autre disposition particulière, l'enveloppe extérieure peut présenter au moins une fente permettant d'orienter le flux d'air.

Selon une autre disposition particulière, l'enveloppe extérieure peut présenter au moins un perçage de réception adapté pour recevoir un silencieux.

L'élément peut être fixé dans la boite à filtre. Ainsi, l'élément peut être ajouté dans une boite à filtre préexistante.

D'autres caractéristiques et avantages de la présente invention ressortiront clairement de la description détaillée ci-après de formes de réalisation de l'invention données à titre d'exemple non limitatif, en référence aux dessins annexés dans lesquels :

- La figure 1 est une représentation éclatée d'un ensemble de filtration selon l'invention ;
- La figure 2 est une vue en perspective d'une forme de réalisation de l'enveloppe extérieure d'un élément selon l'invention ;
- La figure 3 est une vue en perspective des parois intérieures d'un élément selon l'invention ;
- La figure 4 est une représentation schématique de la circulation d'un flux d'air dans un ensemble de filtration selon une forme de réalisation de l'invention ;
- La figure 5 est une représentation schématique de la circulation d'un flux d'air dans un ensemble de filtration selon une autre forme de réalisation de l'invention ;
- La figure 6 est une vue en perspective d'une autre forme de réalisation de l'enveloppe extérieure d'un élément selon l'invention.

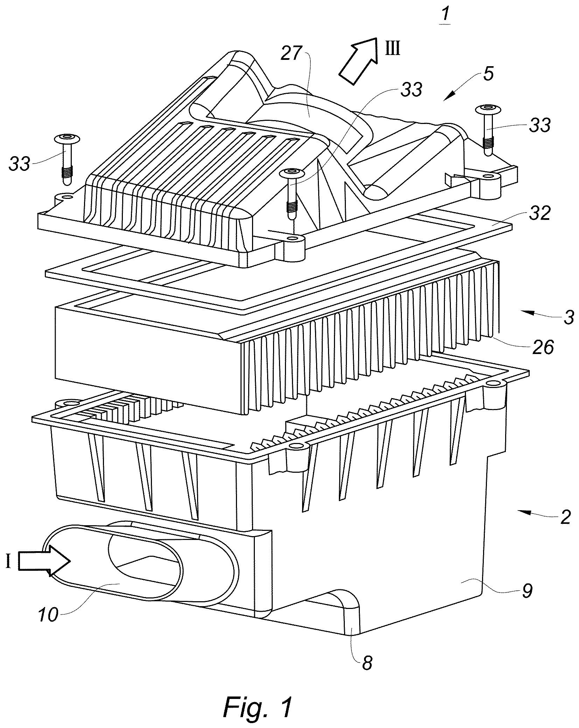

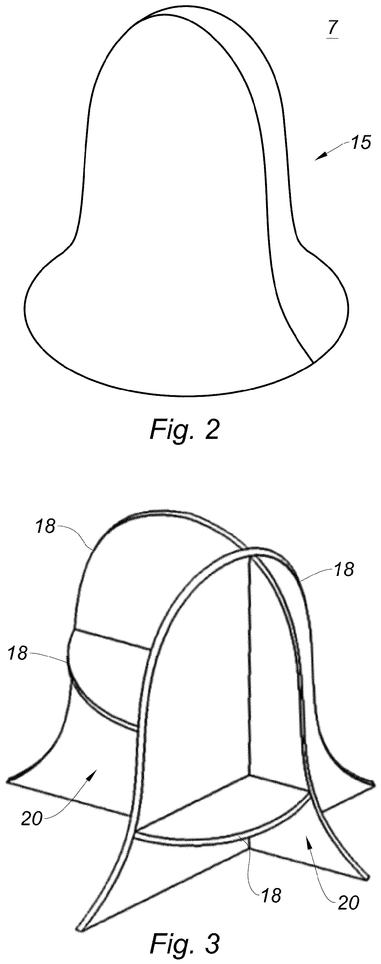

En référence aux figures 1 à 6, l'invention concerne un ensemble de filtration 1 d'un flux d'air pour un véhicule automobile ou un camion

L'ensemble de filtration 1 comprend notamment, une boite à filtre 2, un élément filtrant 3, un couvercle de boite à filtre 5 et un élément 7 de répartition.

Selon le mode de réalisation ici présenté, la boite à filtre 2 présente une forme essentiellement parallélépipédique avec une paroi de fond 8 et quatre parois latérales 9. La boite à filtre 2 peut, par exemple, être réalisée en matériau plastique injecté. Une entrée d'air 10 débouche dans l'une des parois latérales 9, à proximité de la paroi de fond 8.

L'élément 7 de répartition est positionné sur la paroi de fond 8 de la boite à filtre 2, l'élément 7 de répartition étant positionné radialement par rapport à l'entrée d'air 10.

L'élément 7 de répartition peut être venu de moulage avec la boite à filtre 2, ou peut être rapporté et fixé à la paroi de fond 8 de la boite à filtre 2.

L'élément 7 de répartition comprend une enveloppe extérieure 15 à l'intérieur de laquelle est disposé un réseau de parois intérieures 18 qui délimitent une pluralité de chambres 20.

Selon l'invention, l'enveloppe extérieure 15 présente une géométrie sensiblement gaussienne.

En outre, selon d'autres modes de réalisation non représentés, l'enveloppe extérieure 15 peut comprendre des nervures ou des fentes.

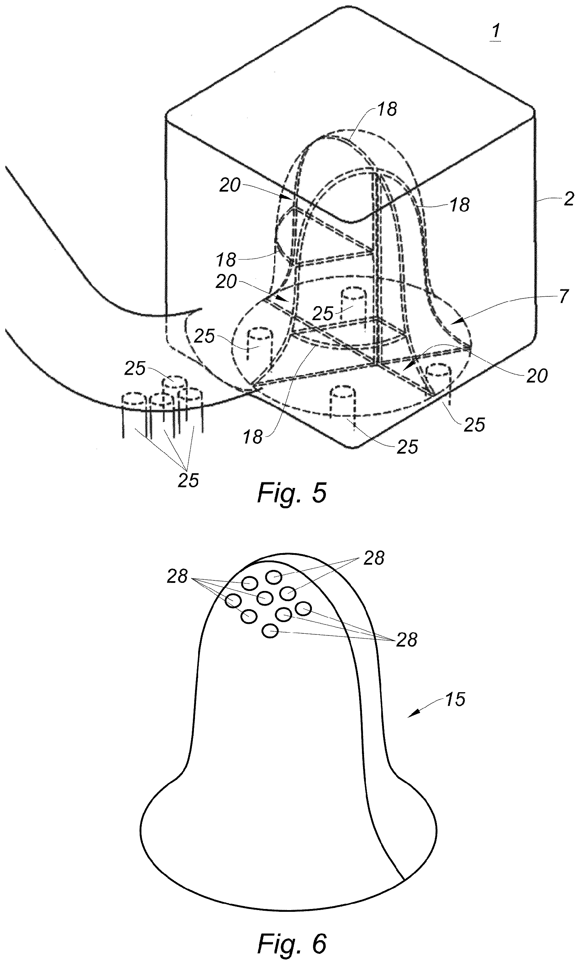

Selon un mode de réalisation présenté en figure 6, l'enveloppe extérieure 15 présente une pluralité de perçages de réception 28. Chaque perçage de réception 28 étant adapté pour recevoir un silencieux (non représenté).

Pour ce qui est de la partie interne de l'élément 7 de répartition, on note que les chambres 20 présentent des dimensions différentes. Les dimensions de chaque chambre 20 sont prévues pour que le volume de résonance de chaque chambre 20 permette d'atténuer une fréquence sonore déterminée.

L'élément 7 de répartition peut donc comprendre une partie externe, l'enveloppe 15 et une partie interne, le réseau de parois intérieures 18 qui peuvent, par exemple, être réalisées en matériau plastique injecté puis assemblées.

Selon un mode de réalisation, l'élément 7 de répartition peut être réalisé dans différents matériaux, les parois intérieures 18 pouvant être réalisées dans des matériaux distincts, pour que les différences de raideurs des matériaux amplifient les effets d'atténuation acoustique.

Selon le mode de réalisation ici présenté, l'ensemble 1 comprend un conduit d'air 25 dérivé de l'entrée d'air 10 et débouchant dans l'une des chambres 20.

Selon d'autres modes de réalisation, l'ensemble de filtration 1 peut comprendre plusieurs conduits d'air 25 comme cela est représenté sur la figure 5.

Les dimensions de chaque conduit d'air 25 sont déterminées en fonction de la fréquence sonore à atténuer, comme suit :  $F = \left(\dfrac{c}{2\pi}\right)\sqrt{\dfrac{S_{cond}}{V * L'_{cond}}}$ , avec :

c : célérité du son,
Scond : section du conduit 25,
Lcond : longueur du conduit 25,
V : volume de résonance de la chambre 20.

L'élément filtrant 3, peut être un élément filtrant classique comprenant un média filtrant plissé. L'élément filtrant 3 présente une face filtrante 26. L'élément filtrant 3 est positionné dans la boite à filtre 2, en aval de l'élément 7 de répartition. La face filtrante 26 est positionnée en regard de l'élément 7 de répartition.

Le couvercle de boite à filtre 5 permet de fermer l'ensemble de filtration 1 d'une manière étanche. Il présente une sortie d'air 27. Le couvercle de boite à filtre 5 peut être réalisé en matériau plastique injecté ou moulé. Selon le mode de réalisation ici présenté, un joint d'étanchéité 32 est intercalé entre le couvercle de boite à filtre 5 et la boite à filtre 2. Le couvercle de boite à filtre 5 est fixé par des vis 33 à la boite à filtre 2 pour permettre le changement de l'élément filtrant 3.

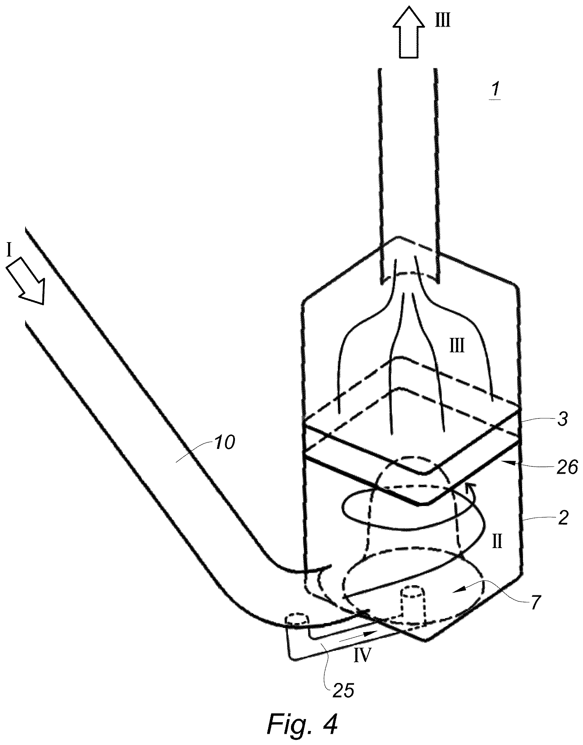

En condition d'utilisation, comme représenté sur la figure 4, le flux d'air I pénètre dans l'ensemble de filtration 1 par l'entrée d'air 10. La géométrie spécifique de l'enveloppe extérieure 15 permet de guider le flux d'air I pour générer un flux d'air cyclonique II, tout en minimisant les pertes de charges. Le flux d'air cyclonique II ainsi généré se répartit d'une manière sensiblement homogène sur la surface filtrante 26.

Puis, le flux d'air cyclonique II traverse l'élément filtrant 3 au travers duquel il est filtré. Le flux d'air filtré III quitte l'ensemble de filtration 1 par la sortie d'air 27, pour être injecté dans un moteur.

En outre, une fraction IV du flux d'air I qui circule dans l'entrée d'air 10, passe par le, ou chaque, conduit d'air 25 et débouche dans l'une des chambres 20 de l'élément 7 de répartition. L'air circulant dans les chambres 20 permet d'atténuer la propagation de certaines ondes acoustiques dans l'ensemble de filtration 1. En effet, les chambres 20 sont utilisées comme des artifices acoustiques de type résonateurs d'Helmholtz. Lorsqu'il est stimulé par des ondes sonores, le volume d'air compris dans le volume de résonance agit sensiblement comme une petite masse, qui serait suspendue à un ressort constitué par le volume d'air plus important contenu dans l'ensemble de filtration 1. On obtient ainsi une atténuation des bruits dans une bande spectrale située au voisinage de la fréquence caractéristique de ce système « masse-ressort » et permet donc de réduire la propagation d'émissions acoustiques sur la ligne d'admission d'air.

Le déposant a effectué des tests comparatifs d'un ensemble de filtration de l'art antérieur et d'une forme de réalisation d'un ensemble de filtration 1 selon l'invention. Les résultats de ces tests sont consignés dans le tableau ci-après.

|  | Version Initiale | Version avec Artifice | Gain |
|---|---|---|---|
| **Perte de charge (Entrée / Sortie)** | 19.6 mbar | 19.2 mbar | **- 2 %** |
| **% de la surface filtrante exploitée de l'élément filtrant** | 0.86 | 0.91 | **+ 5 %** |
| **Volume de résonance** | 0 cm$^3$ | 1150 cm$^3$ | **+ 1150 cm$^3$** |

Ainsi, la forme de réalisation de l'ensemble de filtration 1 testée permet de diminuer d'environ 2% les pertes de charges tout en augmentant de 5% la répartition du flux d'air et en augmentant de 1150 cm$^3$ le volume acoustique de résonance.

L'invention propose donc un ensemble de filtration d'un flux d'air qui permet de répartir le flux d'air sur la surface de filtration du filtre, sans provoquer de pertes de charges et tout en réduisant la propagation d'émissions acoustiques sur la ligne d'admission d'air.

Bien entendu, l'invention ne se limite pas aux seules formes d'exécution représentées ci-dessus, mais elle embrasse au contraire toutes les formes de réalisation.

**Revendications**

1. Ensemble de filtration (1) d'un flux d'air (I) pour un véhicule automobile comprenant une boite à filtre (2) dans laquelle débouche une entrée d'air (10), un couvercle de boite à filtre (5) entre lesquels est interposé un élément filtrant (3), l'ensemble de filtration (1) comprenant un élément (7) de répartition du flux d'air (I) circulant dans la boite à filtre (2), l'élément (7) comprenant (i) une enveloppe extérieure (15) présentant une géométrie adaptée pour former un flux d'air cyclonique (II), et (ii) des moyens d'atténuation acoustique comprenant au moins une chambre (20) délimitant un volume de résonance à l'intérieur de l'élément (7), **caractérisé en ce que** l'élément (7) est disposé en amont de l'élément filtrant (3) et **en ce que** l'enveloppe extérieure (15) présente une géométrie sensiblement gaussienne.

2. Ensemble de filtration (1) selon la revendication 1, **caractérisé en ce que** l'élément (7) comprend plusieurs chambres (20) de dimensions différentes, chaque chambre (20) délimitant un volume de résonance de dimension différente.

3. Ensemble de filtration (1) selon l'une des revendications 1 ou 2, **caractérisé en ce que** l'élément (7) comprend une pluralité de parois intérieures (18) délimitant la, ou chaque, chambre (20).

4. Ensemble de filtration (1) selon l'une quelconque des revendications précédentes, **caractérisé en ce qu'**il comprend au moins un conduit d'air (25) débouchant à l'intérieur de l'élément (7), dans ladite au moins une chambre (20).

5. Ensemble de filtration (1) selon la revendication 4, **caractérisé en ce que** ledit au moins un conduit d'air (25) est un conduit d'alimentation en air dérivé de l'entrée d'air (10).

6. Ensemble de filtration (1) selon l'une quelconque des revendications 1 à 5, **caractérisé en ce que** l'enveloppe extérieure (15) présente au moins une nervure permettant d'orienter le flux d'air.

7. Ensemble de filtration (1) selon l'une quelconque des revendications 1 à 6, **caractérisé en ce que** l'enveloppe extérieure (15) présente au moins une fente permettant d'orienter le flux d'air.

8. Ensemble de filtration (1) selon l'une quelconque de revendications 1 à 7, **caractérisé en ce que** l'enveloppe extérieure (15) présente au moins un perçage de réception (28) adapté pour recevoir un silencieux.

9. Ensemble de filtration (1) selon l'une quelconque des revendications 1 à 8, **caractérisé en ce que** l'élément (7) est fixé dans la boite à filtre (2).

## Patentansprüche

1. Filteranordnung (1) eines Luftstroms (I) für ein Kraftfahrzeug, umfassend ein Filtergehäuse (2), in welches ein Lufteingang (10) mündet, einen Filtergehäusedeckel (5), zwischen denen ein Filterelement (3) eingesetzt ist, wobei die Filteranordnung (1) ein Element (7) zum Verteilen des Luftstroms (I) umfasst, der in dem Filtergehäuse (2) zirkuliert, wobei das Element (7) (i) eine Außenhülle (15), die eine Geometrie aufweist, die angepasst ist, um einen Zyklonluftstrom (II) zu bilden, und (ii) Mittel zur Schalldämpfung umfasst, die mindestens eine Kammer (20) umfassen, die ein Resonanzvolumen im Inneren des Elements (7) eingrenzt, **dadurch gekennzeichnet, dass** das Element (7) stromaufwärts des Filterelements (3) angeordnet ist, und dadurch, dass die Außenhülle (15) eine im wesentlichen Gaußsche Geometrie aufweist.

2. Filteranordnung (1) nach Anspruch 1, **dadurch gekennzeichnet, dass** das Element (7) mehrere Kammern (20) in unterschiedlichen Abmessungen umfasst, wobei jede Kammer (20) ein Resonanzvolumen in einer unterschiedlichen Abmessung eingrenzt.

3. Filteranordnung (1) nach einem der Ansprüche 1 oder 2, **dadurch gekennzeichnet, dass** das Element (7) eine Vielzahl von Innenwänden (18) umfasst, welche die oder jede Kammer (20) eingrenzen.

4. Filteranordnung (1) nach einem der vorstehenden Ansprüche, **dadurch gekennzeichnet, dass** sie mindestens einen Luftkanal (25) umfasst, der im Inneren des Elements (7) in die mindestens eine Kammer (20) mündet.

5. Filteranordnung (1) nach Anspruch 4, **dadurch gekennzeichnet, dass** der mindestens eine Luftkanal (25) ein Versorgungskanal von Luft ist, der vom Lufteingang (10) abgeleitet wird.

6. Filteranordnung (1) nach einem der Ansprüche 1 bis 5, **dadurch gekennzeichnet, dass** die Außenhülle (15) mindestens eine Rippe aufweist, die es ermöglicht, den Luftstrom auszurichten.

7. Filteranordnung (1) nach einem der Ansprüche 1 bis 6, **dadurch gekennzeichnet, dass** die Außenhülle (15) mindestens einen Schlitz aufweist, der es ermöglicht, den Luftstrom auszurichten.

8. Filteranordnung (1) nach einem der Ansprüche 1 bis 7, **dadurch gekennzeichnet, dass** die Außenhülle (15) mindestens eine Aufnahmebohrung (28) aufweist, die angepasst ist, um einen Schaldämpfer aufzunehmen.

9. Filteranordnung (1) nach einem der Ansprüche 1 bis 8, **dadurch gekennzeichnet, dass** das Element (7) in dem Filtergehäuse (2) befestigt ist.

**Claims**

1. A set (1) for filtering an air flow (I) for a motor vehicle comprising a filter box (2) into which an air inlet (10) opens, a filter box cover (5) between which a filter element (3) is interposed, the filter set (1) comprising an element (7) for splitting the airflow (1) circulating in the filter box (2), the element (7) comprising (i) an external shell (15) having a geometry adapted to form a cyclonic air flow (II), and (ii) acoustic attenuation means comprising at least one chamber (20) defining a resonance volume inside the element (7), **characterized in that** the element (7) is disposed upstream of the filter element (3) and **in that** the external shell (15) has a substantially Gaussian geometry.

2. The filtration set (1) according to claim 1, **characterized in that** the element (7) comprises several chambers (20) with different dimensions, each chamber (20) delimiting a resonance volume with a different dimension.

3. The filtration set (1) according to any of claims 1 or 2, **characterized in that** the element (7) comprises a plurality of internal walls (18) delimiting the, or each, chamber (20).

4. The filtration set (1) according to any one of the preceding claims, **characterized in that** it comprises at least one air duct (25) opening inside the element (7), into said at least one chamber (20).

5. The filtration set (1) according to claim 4, **characterized in that** said at least one air duct (25) is an air supply duct derived from the air inlet (10).

6. The filtration set (1) according to any one of claims 1 to 5, **characterized in that** the external shell (15) has at least one rib allowing orienting the air flow.

7. The filtration set (1) according to any one of claims 1 to 6, **characterized in that** the external shell (15) has at least one slot allowing orienting the air flow.

8. The filtration set (1) according to any one of claims 1 to 7, **characterized in that** the external shell (15) has at least one receiving bore (28) adapted to receive a muffler.

9. The filtration set (1) according to any one of claims 1 to 8, **characterized in that** the element (7) is fastened in the filter box (2).

*Fig. 1*

_7_

_15_

**Fig. 2**

_18_

_18_

_18_

_18_

_20_

_20_

**Fig. 3**

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102012000806
- CN 202100355 U
- GB 1003056 A